# EUROPEAN PATENT SPECIFICATION

(11) **EP 3 917 280 B1**
(45) Date of publication and mention of the grant of the patent: **07.06.2023**
(21) Application number: 20382453.7
(22) Date of filing: 28.05.2020
(51) Int. Cl.: H05B 3/38, H05B 3/14

(54) **EMBEDDED COMPOSITE HEATING ELEMENT**
EINGEBETTETES VERBUNDHEIZELEMENT
ÉLÉMENT DE CHAUFFAGE COMPOSITE INTÉGRÉ

(43) Date of publication of application: 01.12.2021
(73) Proprietor: Ohmvo Flexible Heat, S.L.U., 08739 Lavern (Barcelona) (ES)
(72) Inventor: Férriz Canals, Andreu, 08392 Sant Andreu de Llavaneres (Barcelona) (ES); Trias Pou, Salvador, 08130 Santa Perpetua de Mogoda (Barcelona) (ES); Llauradó Aspachs, Josep Maria, 08037 Barcelona (ES)
(74) Representative: Gallego Jiménez, José Fernando

(56) References cited:
- KR-A- 20190 065 223
- US-A- 3 387 248
- US-A1- 2003 052 114
- US-A1- 2016 144 690

## Description

### Technical Field

The present invention belongs to the field of composite heating elements.

### Background art

Structural heating elements are attractive in the field of building industry, industrial systems and transportation infrastructures, for many purposes, for example, as de-icing in aeronautical and automotive systems, or to heat the floor and walls of public transport systems or living rooms.

The incorporation of the heating element into a structural material provides advantages, for example, higher durability, lower manufacturing costs, greater implementation, convenience higher spatial uniformity of the heating, and greater volume of the heating element, as disclosed in D. D. L. Chung, Composite Materials: Science and Applications, 2nd Edition, Springer, London, 2010, page 213.

In the last decades, there has been an increasing interest in composites, a kind of material very close to human body, as a combination of two or more materials that together creates synergistically a new material, stronger, lighter and resistant to electricity, much better than metals. As the manufacturing and raw material costs of these composites have been dramatically reduced in the last years, many new and potential applications in the railway, automotive and building industries have focused the attention. Heating these new materials by embedding effectively a heater is a challenge and an opportunity for all the potential uses in those market segments.

Flexible heating elements are mainly based on resistive printed circuit boards or electrical wires embedded in a silicone polymer, for example. In most of the heating applications these heaters are attached to the objects to be heated by means of mechanical fixing or polymer adhesives. These systems are manufactured using complex processes, which not always are environmentally friendly and that often are very inefficient, creating unnecessary energy loses and temperature heterogeneities.

Cement-matrix composites and polymer-matrix composites are preferably used in the building industry, and the latter in aircraft, due to lighter weight.

Polymer-matrix composites show higher versatility due to the possibility of selecting the polymer and, if necessary, the reinforcing element most appropriate for a specific application.

In the prior art, there have been proposed multiple technical solutions to provide structural heating elements.

For example, International patent application WO-A-2009/129615 discloses an integrated thick film heating element on a substrate made from high temperature melt-flowable thermoplastic polymer/powder additive formulations which form an electrically insulating thermoplastic dielectric coating on the substrate.

International patent application WO-A-2009/146429 discloses a radiant heating system, comprising: a substrate comprising an underlayment building material; a thermally sprayed resistive heating layer over the substrate having a specific watt density; and at least one electrical connector for providing electrical power to the resistive heating layer.

International patent application WO-A-2012/059417 discloses a method for manufacturing a flexible heater comprising a resistive track enclosed in two sheets of electrically insulating plastic material, said track comprising electrical connections to which electrical wires are connected, the method comprising the steps of: -enclosing the resistive track in the two sheets of electrically insulating plastic material - connecting the electrical wires to the electrical connections of the resistive track - putting an open mould around the connection area - injecting a liquid casting formulation into said mould - curing said composition - removing the mould.

Korean patent KR-B-101804216 discloses a conductive composite body in the form of a panel in which a carbon nano material is mixed with a binder material and is heated by electric energy applied from the outside, by means of an electrode made of conductive material embedded in the conductive composite body. According to the description, the conductive composite panel is made by mixing carbon nanotubes into a binder material such as cement.

KR20190065223A discloses a heating composite element comprising a heating assembly embedded by a polymer; the heating assembly consisting of an electrically conductive matrix, at least two electrodes attached to the electrically conductive matrix, and at least one sheet of reinforcing material; wherein the electrically conductive matrix comprises a conductive filler consisting of multiwall carbon nanotubes; and wherein the electrically conductive matrix is manufactured by screen printing.

Despite the numerous proposals available in the state of the art, there is still a need to have a new heating composite element of easy manufacture, quick response and adjustable electrical power.

### Object of the invention

The object of the present invention is a heating composite element according to claim 1.

It is another aspect of the invention a method of preparing the heating composite element according to claim 13.

It is another aspect of the invention the use of that heating composite element.

### Figures

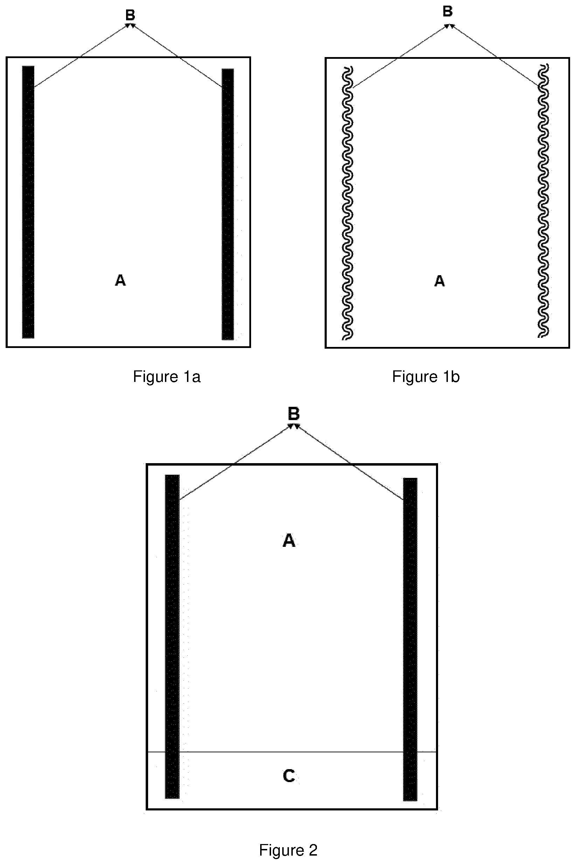

Figures 1a and 1b show schematically the electrically conductive matrix (A) and two electrodes, B, in parallel layout, and having different shapes.
Figure 2 shows schematically the screen printed electrically conductive matrix (A), two electrodes (B), and the isolating area (C), which is electrically non-conductive.

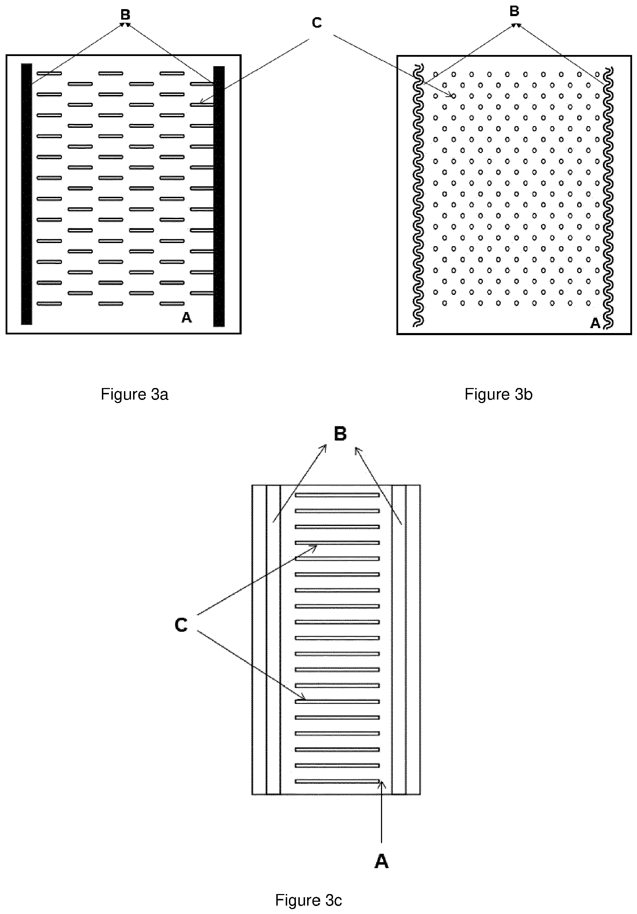

Figures 3a and 3b represent schematically the heating assembly with the bores of different shapes: rectangular and circular Figure 3c represents bores in an electrically conductive matrix manufactured with electrodes made of copper cloth integrated in glass fibre fabric. In these figures, wherein A represents the electrically conductive matrix, B represents the electrodes and C the bores.

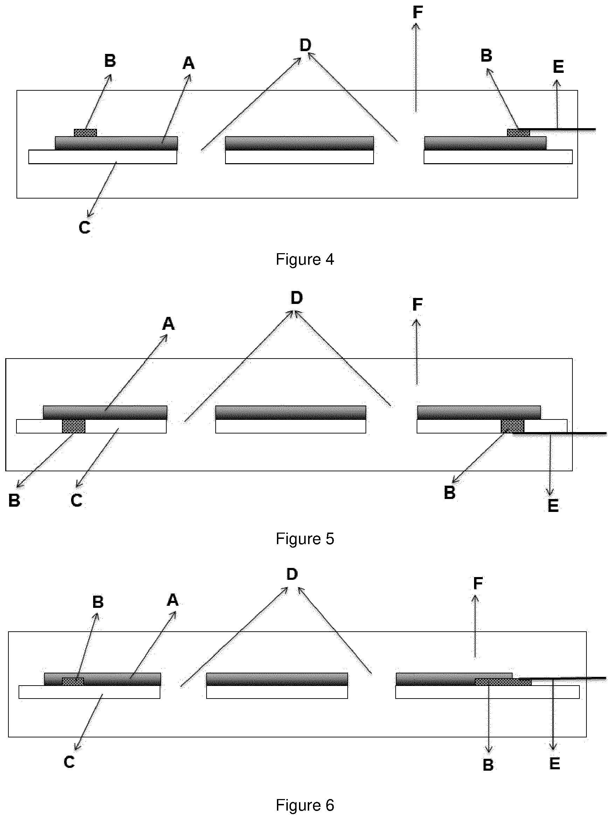

Figure 4 shows a transversal schematic view of an embodiment of the heating composite element disclosed in Example 1, wherein A is the screen printed electrically conductive matrix, B are electrodes, C is the reinforcing material (e.g. glass fibre fabric), D represents bores drilled through the heating assembly, E represent a connecting pad attached to the electrode, and F represents the embedding polymer (e.g. phenolic resin prepreg).
Figure 5 shows a transversal schematic view of an embodiment of the heating composite element disclosed in Example 3, wherein A is the screen printed electrically conductive matrix, B are integrated electrodes in the reinforcing material, C, (e.g. glass fibre fabric), D represents bores drilled through the heating assembly, E represent a connecting pad attached to the electrode, and F represents the embedding polymer (e.g. phenolic resin prepreg).
Figure 6 shows a transversal schematic view of an embodiment of the heating composite element disclosed in Example 5, wherein A is the screen printed electrically conductive matrix, B are electrodes stuck to the reinforcing material, C, (e.g. glass fibre fabric), D represents bores drilled through the heating assembly, E represent a connecting pad attached to the electrode, and F represents the embedding polymer (e.g. acrylate resin).

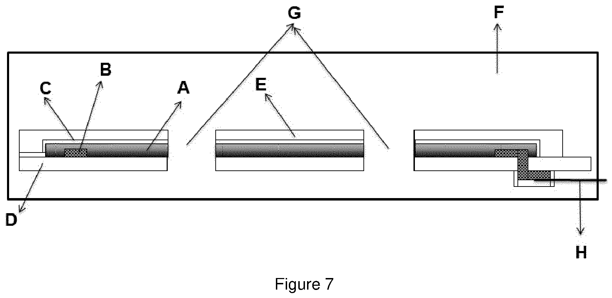

Figure 7 shows a transversal schematic view of an embodiment of the heating composite element disclosed in Example 7, wherein A is the screen printed electrically conductive matrix, B is an electrode, D is the reinforcing material (e.g. PET), E is the reinforcing material stuck to the screen printed electrically conductive matrix by means of a silicone adhesive (C), F is the embedding polymer, G represents bores drilled through the heating assembly, and H represents a connecting pad attached to the electrode.

### Detailed description of the invention

The object of the present invention is a heating composite element comprising:
a) a heating assembly consisting of:
   a. an electrically conductive matrix comprising:
      i. a cured room temperature vulcanizing (RTV) silicone, and
      ii. a conductive filler selected from a group consisting of
         1. multiwall carbon nanotubes and
         2. a mixture of multiwall carbon nanotubes and carbon black,
   b. at least two electrodes attached to the electrically conductive matrix, and
   c. at least one sheet of reinforcing material,
b) a polymer selected from the group consisting of thermoplastic polymer, acrylate resin, phenolic resin, and epoxy resin,

wherein the heating assembly a) is embedded by the polymer b),
wherein the electrically conductive matrix is manufactured by screen printing of the room temperature vulcanizing silicone, and
wherein the heating assembly is drilled.

The authors of the present invention have developed a heating composite element which shows the following advantages: modular system, easy manufacture, final equilibrium temperature reached very fast, resistance to thermal variations without crack or deformation, high tear strength of the silicone heater element, providing advantages in the handling of the heater in composite units production, homogenous and stable heating, better adjustment of the electrical power range, reduction the risk of internal delamination, lower internal silicone temperature, and suitable electrical insulation.

The term "approximately" or "about" refers to a deviation of plus/minus 10%, preferably plus/minus 5%.

In the present description, as well as in the claims, the singular forms "a", "an" and "the" include the plural reference unless the context clearly indicates otherwise. The ranges defined by the preposition "between" include also the two ends thereof.

The term "embedded" means that the heating assembly is fixed firmly in a surrounding mass of a specific polymer.

In the context of the description, the open term "comprising" and related terms also encompass closed wordings such as "consisting essentially of" and "consisting of".

### Cured room temperature vulcanizing silicone

The electrically conductive matrix of the invention comprises a cured room temperature vulcanizing silicone, which is known as RTV.

RTV silicone is a type of silicone rubber, which cures at room temperature or at a higher temperature in a standard heating oven. It can be made from a onecomponent or two-component system (base plus curative; A+B) available in a hardness range of very soft to medium--usually from 15 to 40 Shore A.

RTV silicones can be cured with a catalyst consisting of either platinum or a tin compound such as dibutyltin dilaurate.

The curing with a tin catalyst requires the concurrence of air moisture, and the process is known as condensation cure.

The use of Pt catalysts does not require moisture for curing and the process is known as addition cure.

In a preferred embodiment, the RTV silicone consists of two components: Part A and Part B, one of them comprising the catalyst, preferably a Pt catalyst, and the other one comprising the Si-H groups containing compound. Curing reaction between Part A and Part B takes place at room temperature, but vulcanising speed can be activated by heating in an oven at higher temperature, for example, 110º C to 130º C.

Hot temperature vulcanising silicone, HTV silicone, may also be used in the preparation of the electrically conductive matrix.

The content of the RTV silicone in the electrically conductive matrix is usually comprised between 80 wt.% and 99.5 wt.%, preferably between 85 wt.% and 99 wt.%, more preferably between 87 wt.% and 98 wt.%, and yet more preferably between 88 wt.% and 97 wt.% on the solid content of the electrically conductive matrix.

The viscosity of the RTV silicone before vulcanising usually is comprised between 2.000 and 80.000 mPa.s, preferably between 10.000 and 75.000 mPa.s, and more preferably between 30.000 and 65.000 mPa.s.

In a preferred embodiment, the cured RTV silicone has a Shore A hardness (Standard ISO R868) of about 50, a tensile strength (Standard ISO R 37 (H2)) of about 5.5 MPa, and an elongation at break (Standard ISO R 37 (H2)) higher than 160%. In a preferred embodiment the RTV silicone is ESA-3744 (Elkem).

RTV silicones are commercially available through companies such as Momentive, Wacker, Shin-Etsu, Elkem, or Dow Corning.

### Electrically conductive filler

The electrically conductive matrix of the invention comprises a conductive filler selected from a group consisting of multiwall carbon nanotubes (MWCNTs) and a mixture of MWCNTs and carbon black.

MWCNTs consist of nested single-wall carbon nanotubes, wherein these are one of the allotropes of carbon, intermediate between fullerene cages and flat graphene. Carbon nanotubes can also refer to tubes with an undetermined carbon-wall structure and diameters less than 100 nm.

MWCNTs can be produced via the catalytic carbon vapor deposition (CCVD) process.

In a preferred embodiment, MWCNTs have an average diameter comprised between 5 and 20 nm, preferably about 10 nm, measured by Transmission electron microscopy (TEM), and an average length of 0.5 to 5 µm, preferably about 1.5 µm, measured by TEM.

In a preferred embodiment, carbon black is acetylene carbon black. Acetylene carbon black is a type of carbon black obtained from thermal decomposition of acetylene, which is highly purified and shows high conductivity.

In a preferred embodiment the conductive filler is MWCNTs, and the content thereof is usually comprised between 0.5 wt.% and 8wt.%, preferably between 0.8 wt.% and 5 wt.%, more preferably between 1 wt.% and 3 wt.%, and yet more preferably about 1.5 wt.% on the solid content of the electrically conductive matrix.

In another preferred embodiment the conductive filler is a mixture of MWCNTs and carbon black, more preferably a mixture of MWCNTs and acetylene carbon black. In this preferred embodiment, the content of MWCNTs is usually comprised between 0.5 wt.% and 8wt.%, preferably between 0.8 wt.% and 5 wt.%, more preferably between 1 wt.% and 3 wt.%, and yet more preferably about 1.6 wt.% on the solid content of the electrically conductive matrix. In this preferred embodiment, the content of carbon black is usually comprised between 2 wt.% and 18 wt.%, preferably between 3 wt.% and 16 wt.%, more preferably between 5 wt.% and 14 wt.%, more preferably between 7 wt.% and 12 wt.%, and yet more preferably about 10 wt.% on the solid content of the electrically conductive matrix. In a particularly preferred embodiment, the conductive filler is a mixture of mixture of MWCNTs and acetylene carbon black, wherein the content of MWCNTs is 1.6 wt.% and the content of acetylene carbon black is 10 wt.%. In another particularly preferred embodiment, the conductive filler is a mixture of mixture of MWCNTs and acetylene carbon black, wherein the content of MWCNTs is 2 wt.% and the content of acetylene carbon black is 3.8 wt.%.

The mixture of conductive fillers is suitable to adjust volume resistivity of the electrically conductive matrix, and to adjust rheological properties thereof. Carbon black provides a less fibrous electrically conductive compounds and usually reduces thixotropy behaviour of MWCNTs.

MWCNTs are commercially available through companies such as, for example, Hongwu International Group, US Research Nanomaterials, or Nanocyl.

Carbon black, including acetylene carbon black is commercially available through companies such as, for example, Chemi Enterprises, Denka, or Soltex.

### Electrodes

The electrically conductive matrix of the invention comprises at least two electrodes attached thereto according to a parallel layout, whose shape may be, for example, rectangular, or wavy as shown schematically in Figures 1a and 1b.

Electrodes used in the heating assembly may be made of any one of the following metals: copper, silver or aluminium, preferably copper.

The basis of the electrodes may be metallic foil, metallic cloth or screen printed metallic conductor.

Copper electrodes may be made of copper foil, preferably soft annealed copper foil, or made of copper cloth, which is manufactured with copper yarns integrated in glass fibre fabric with a defined warp and weft. Copper foil is commercially available through companies, for example, such as Car Schlenk. Integrated Copper cloth is commercially available through companies, such as, for example, TissTech.

The thickness of the copper foil or cloth is usually comprised between 9 µm and 90 µm, preferably, between 12 µm and 70 µm, more preferably between 20 µm and 50 µm, and yet more preferably about 35 µm.

The width of the copper electrodes is usually from about 5 mm to about 10 mm. The shape of the electrodes may be rectangular or wavy, as shown in Figures 1a and 1b, being the wavy form suitable for final applications requiring more flexibility.

The distance between the copper electrodes may be adjusted by the skilled person in the art to obtain a specific voltage of the heating assembly.

The attachment of the copper electrodes to the electrically conductive matrix may be carried out in different ways.

In one embodiment, the copper electrodes made of copper foil are adhesivated with an adhesive, for example acrylic or silicone adhesive, attached to a sheet of a reinforcing material selected from a thermoplastic polymer (for example, a PET foil), a glass fibre fabric, a glass filament mat, and covered by at least one layer of screen printed electrically conductive matrix.

In an embodiment, metallic electrodes obtained using inks, comprising a polymer and a high load of metal, by standard printing techniques on a substrate such as thermoplastic polymer foil (for example, PET, polyamide, polyimide, polyethylene naphthalate, PVC, polyethylene, polystyrene, Teflon, or polybenzimidazole) may be used as an alternative to the above-mentioned adhesivated copper stripes. Conductive inks, comprising a polymer and a high load of metal, are commercially available through companies such as, for example, Dupont, Applied Technologies, or Dow Consumer. These conductive inks show outstanding electrical conductivity and excellent adhesion to various substrates.

In one embodiment, the copper electrodes are made of copper cloth integrated in glass fibre fabric covered by at least one layer of screen printed electrically conductive matrix. In one embodiment, both sides of these electrodes may be covered by at least one layer of screen printed electrically conductive matrix

In one embodiment, the copper electrodes made of copper foil are asymmetrically modified: on one side it is attached a reinforcement and the other side is coated by at least one layer of conductive RTV silicone adhesive to enable the attachment of the electrodes to the electrically conductive matrix. The purpose of the reinforcement of the electrodes is to protect the electrodes against mechanical impacts and to enhance breakdown resistance, depending on the final polymer embedding system. The modification takes place usually on a copper foil, preferably on a soft annealed copper foil. The reinforced side of the electrodes comprises a layer of glass fibre fabric or glass filament mat embedded in at least one layer of a screen printed non-conductive silicone matrix made of RTV silicone, and the other side is covered with at least one layer of screen printed conductive silicone adhesive, which is attached to the electrically conductive matrix. The reinforcing material of the electrode is usually glass cloth having 46 g/m², such as style 1080 (Isola), but other glass styles are also suitable such as 106, 2113, or 2116 (Isola). In a preferred embodiment, the copper foil is brushed with a primer to enhance the adhesion of the non-conductive silicone matrix to the copper foil. In a preferred embodiment, a silicone matting agent is brushed on the top of the non-conductive silicone layer. In a more preferred embodiment, both a primer and a silicone matting agent are used. The RTV silicone used in these modifications is vulcanised at a temperature comprised between 110º C and 130º C. In a preferred embodiment, the non-conductive silicone matrix is prepared using an RTV silicone having a viscosity of about 36.000 mPa.s (at 25º C, 10 s⁻¹), a hardness Shore A (DIN 53505) of about 38, a tensile strength (DIN 53504) of about 6.0 MPa, an elongation (DIN 53504) of about 400%, and a tear strength (DIN53515) of about 18 N/mm. In a preferred embodiment, the RTV silicone for preparing non-conductive silicone matrix is ESA-7231 (Elkem). In a preferred embodiment, the conductive silicone adhesive consists of Part A and Part B, which are mixed 1:1 by weight, which has a viscosity (at 23º C) of about 10.000 mPa.s, and after curing has a penetration (Hollow cone 62.5 g, DIN ISO2137) of about 205 mm/10, and a substrate adhesion (rub off test coating on PU film 200 gsm) of at least 30. In a more preferred embodiment, the conductive silicone adhesive consists of RT GEL 4645 (Elkem).

In an embodiment, the electrodes are manufactured by screen printing on the electrically conductive silicone of a metallic conductor. The metallic conductor is a paste comprising a polymer and a high load of metal particles. Metal particles may be, for example, silver coated copper particles. This method is especially useful for complex designs and shapes. The metal included in the polymer is usually selected from copper, silver and aluminium. Pastes comprising a polymer and a high load of metal are commercially available from companies, such as, for example, Dupont. In an embodiment, a 200-mesh stainless steel screen is typically used. Typical cure conditions for these pastes are about 170º C for about 30 minutes. Typical circuit lane is about 25 - 30 µm.

### Reinforcing material

The electrically conductive matrix of the invention comprises at least one sheet of reinforcing material.

A reinforcing material is a material that strengthens an existing material when added to it. Thus, a reinforcing material increases mechanical properties when added to another material.

The reinforcing material may be selected, for example, from glass fibre fabric, glass filament mat, or a thermoplastic polymer foil (for example, PET, polyamide, polyimide, polyethylene naphthalate, PVC, polyethylene, polystyrene, Teflon, or polybenzimidazole), which that in a woven or non-woven yarn or foil form provides a mechanical support to the electrically conductive matrix.. In a preferred embodiment, the reinforcing material is selected from glass fibre fabric, glass filament mat, and PET foil. In a more preferred embodiment, the reinforcing material is selected from glass fibre fabric and glass filament mat. In a yet more preferred embodiment, the reinforcing material is glass fibre fabric. In another preferred embodiment, the reinforcing material is PET foil.

A glass fibre fabric showing about at least 200 g/m² is suitable for electrical applications, because its porosity is low enough to avoid filtering of the electrically conductive matrix through it.

In an embodiment, the electrically conductive matrix is screen printed on the reinforcing material, and the electrodes, in particular copper electrodes, are attached thereto or screen printed thereon using a paste comprising a polymer and a high load of metallic particles.

In an embodiment, the copper electrodes are adhesivated with a standard adhesive, for example, acrylic or silicone, and attached to the reinforcing material. The electrically conductive matrix is screen printed on the assembly comprising the reinforcing material and the attached electrodes.

In an embodiment, the copper electrodes are integrated as copper cloth in a glass fibre fabric, and the electrically conductive matrix is directly screen printed on that material.

In an embodiment, the heating assembly has a sandwich structure, comprising reinforcing material at the bottom and at the top, and in the middle, there is the electrically conductive matrix and the electrodes. The top reinforcing material is usually adhesivated with a silicone adhesive to improve the adhesion on the electrically conductive matrix. This embodiment is disclosed in Example 7, and represented schematically in Figure 7.

Usually, the length of the reinforcing material is larger than the length of the electrodes.

### Embedding polymer

The heating assembly of the invention comprises a polymer, which embeds the heating assembly.

In this description, the term "embedded" means that the heating assembly is fixed firmly in a surrounding mass of a specific polymer.

The embedding polymer is selected from thermoplastic polymer, acrylic resin, phenolic resin, and epoxy resin.

The thermoplastic polymer is usually a thermoplastic polyester, such as, for example, PET, polyamide, polyimide, polyethylene naphthalate, PVC, polyethylene, polystyrene, Teflon, or polybenzimidazole.

The acrylic polymer is an acrylic resin, which may be modified with inorganic fillers. In a preferred embodiment, the acrylic resin is a rapid setting acrylic modified cementitious composite, which can be applied by hand lamination. Hand lamination requires a polymer showing good flow to penetrate through the bores of the Acrylic polymers are commercially available through companies, such as, for example, Jesmonite.

The phenolic and epoxy resin polymer may be used as a resin alone or as a prepreg, i.e. a resin impregnated reinforcement. Embedding of the heating element by the phenolic or the epoxy resin prepreg may be applied by different methods, well-known to the skilled person in the art, such as resin transfer moulding, autoclave moulding, vacuum resin transfer moulding, high pressure lamination, or compression moulding. In a preferred embodiment, the embedding is carried out by high pressure lamination, wherein it is used an intermediate polymerised prepreg, that flows and bonds under pressure and temperature. An epoxy resin may be also applied by hand lamination. Phenolic and epoxy resin polymers and intermediate polymerizate prepregs are commercially available through companies, such as, from example, Hexcel, Solvay or Mäder Composites.

In a preferred embodiment, the embedding polymer may contain a particulate or layered, organic or inorganic filler. Suitable fillers are, for example, inorganic compounds, such as chalk, lime flour, kaolin, talcum, barium sulfate, mica, precipitated silica, pyrogenic silica, zeolites, bentonites, ground minerals, glass beads, glass powder, hollow glass beads, glass filament mat, glass fibre fabric, and chopped strands and other inorganic fillers known to the expert, and also organic fillers, more particularly short-staple fibres or hollow plastic beads. In a more preferred embodiment, the particulate filler is inorganic.

In an embodiment, the embedding polymer is a thermoplastic polymer.

In an embodiment, the embedding polymer is a phenolic resin, preferably a phenolic resin prepreg.

In an embodiment, the embedding polymer is an epoxy resin, preferably an epoxy resin prepreg.

In an embodiment, the embedding polymer is an acrylate resin.

### Method of preparing the heating composite element

A method of preparing the heating composite element of the invention is an aspect of the object of the invention.

In one embodiment, the method comprises:
1) manufacturing of the heating assembly, and
2) embedding the heating assembly by a polymer selected from the group consisting of thermoplastic polymer, acrylate resin, phenolic resin, and epoxy resin,
wherein the process 1) comprises:
a) mixing a room temperature vulcanizing silicone and a conductive filler selected from a group consisting of multiwall carbon nanotubes and a mixture of multiwall carbon nanotubes and carbon black,
b) either i) screen printing the mixture obtained in step a) on at least one sheet of reinforcing material, ii) curing the screen printed material, and iii) attaching at least two copper electrodes to the cured screen printed material to obtain a cured assembly, or
   i) screen printing the mixture obtained in step a) on at least one sheet of reinforcing material, ii) curing the screen printed material, and iii) screen printing of a paste comprising a polymer and copper particles on the cured screen printed material to obtain a cured assembly, or
   i) attaching at least two copper electrodes to at least one sheet of reinforcing material, ii) screen printing the mixture obtained in step a) on at least one sheet of reinforcing material comprising at least two copper electrodes, and iii) curing the screen printed material to obtain a cured assembly, or
   i) screen printing the mixture obtained in step a) on at least one sheet of reinforcing material comprising at least two integrated copper electrodes, and ii) curing the screen printed material to obtain a cured assembly,
c) drilling the region comprised between the electrodes of the cured assembly obtained in step b), and
d) welding wiring cables to the electrodes surface.

### Mixing

The mixing step of the room temperature vulcanizing (RTV) silicone and the conductive filler is usually carried out by mechanical stirring to obtain a dispersion of the filler in the silicone, due to the colour of the filler a black slurry is obtained. To remove agglomerates of the filler it is preferred to refine the slurry in a 3-roll mill, for example, a Torrey-Hills 3 roll mill (TRM). The skilled person in the art can adjust properly the gauge between the rolls to remove any agglomerate. In general, it is used a gauge about 20 microns. The absence of agglomerates in the conductive matrix provides better electrical performance and thermal resistance to the heater. The refining leads to a high fibrous conductive compound.

Preferably, it is used a two-component RTV silicone. In this case, each part, Part A and Part B, are mixed separately with the conductive filler and also refined separately.

If it is necessary to reduce the viscosity of the fibrous conductive compound for a proper screen printing, a solvent may be added thereto under high stirring, for example, 10.000 rpm, and maintaining the stirring up to homogenization and absence of agglomerates. Suitable solvents are, for example, toluene, hexane, isopropyl alcohol, methyl ethyl ketone, or xylene. A preferred solvent is xylene. In a preferred embodiment, the mixture of RTV silicone and conductive filler comprises a solvent, and in a more preferred embodiment, the solvent is xylene.

### Screen printing

Screen printing is a coating process suitable for applying the different silicone materials used for preparing the heating assembly of the invention.

This coating process provides a fine adjustment of the electrical resistance of the heating composite element of the invention. It can be carried out using standard screen printing devices, such as, for example, THIEME Flat bed screen printer with sliding table.

The parameters of the screen printing process are usually adjusted by the skilled person to obtain regular layers of the electrically conductive matrix. High screen printing speed is preferred to obtain high electrically conductive thickness. The screen mesh is usually comprised between 10 and 29, being preferred 15. The number of layers is usually comprised between 1 and 5, preferably between 2 and 3. The coating thickness is usually comprised between 100 µm and 500 µm, preferably between 100 µm and 300 µm. The blade may be soft and round, or sharp and hard. The screen printing process is controlled by measuring the voltage at 0.1 A of current intensity. Measured voltage in the heat composite element of the invention is usually comprised from 10 to 50 V.

In one embodiment of the process of the invention, the mixture of RTV silicone and conductive filler is applied by screen printing on at least one sheet of reinforcing material. The screen printed material is cured. The cured assembly is obtained by a curing step carried out at room temperature, or at higher temperature in an oven, for example, 110º C to 130º C, to increase curing speed. After curing, at least two copper electrodes are attached to the cured screen printed material to obtain the heating assembly of the invention. In a preferred embodiment, the copper electrodes are asymmetrically modified, as disclosed above: on one side it is attached a reinforcement and the other side is covered by at least one layer of conductive RTV silicone adhesive, which maintains a tacky surface after curing, to enable the attachment of the electrodes to the electrically conductive matrix.

In another embodiment of the process of the invention, the first step corresponds to the attachment of at least two copper electrodes to at least one sheet of reinforcing material by using a standard adhesive, for example, acrylate or silicone adhesive, the mixture of RTV silicone and conductive filler is screen printed on at least one sheet of reinforcing material comprising at least two copper electrodes. The assembly is cured carried out at room temperature, or at higher temperature in an oven, for example, 110º C to 130º C, to increase curing speed, to obtain the heating assembly of the invention.

In another embodiment of the process of the invention, the mixture of RTV silicone and conductive filler is applied by screen printing on at least one sheet of reinforcing material comprising at least two integrated copper electrodes. These copper electrodes are made of copper cloth integrated in glass fibre fabric, as exposed above the assembly is cured at room temperature, or at higher temperature in an oven, for example, 110º C to 130º C, to increase curing speed, to obtain the heating assembly of the invention.

In some embodiments, the length of the screen printed area (conductive area) may be smaller than the length of the area of the reinforcing material, as shown in Figure 2. There is an area of the reinforcing material, which is not screen printed with the electrically conductive matrix. This feature provides an isolated area at the bottom of the heating assembly. The length of the electrodes is larger than the length of the conductive area, and the end of each electrode is in contact with the non-conductive area of the heating element.

### Drilling

The heating assembly is drilled in the region comprised between the electrodes. The number of bores, the size and the shape may be defined by the skilled person in the art. The perforation of the heating assembly allows the penetration of the embedding polymer therethrough. In a preferred embodiment, the distribution of bores is as much uniform as possible to ensure a uniform heating and, consequently, uniform temperature on the surface of the heating composite element. Figures 7a and 7b shows different types of bores. Figure 7c represents bores in an electrically conductive matrix manufactured with electrodes made of copper cloth integrated in glass fibre fabric.

### Welding

Wires are welded to the electrodes in order to make connections once the heating assembly is embedded by the polymer. In a preferred embodiment, welding is carried out to provide a welding layer as much smooth and thin as possible.

### Embedding

The heating assembly of the invention is embedded by a polymer selected from the group consisting of thermoplastic polymer, acrylate resin, phenolic resin, and epoxy resin.

The embedding process may be carried out by any of the processes available to the skilled person in the art, such as, for example, hand lamination, resin transfer moulding, autoclave moulding, vacuum resin transfer moulding, high pressure lamination, or compression moulding.

### Heating composite element

In a preferred embodiment, the heating composite element comprises:
a) a heating assembly consisting of:
   a. an electrically conductive matrix comprising:
      i. a cured room temperature vulcanizing silicone, and
      ii. a conductive filler selected from a group consisting of
         1. multiwall carbon nanotubes and
         2. a mixture of multiwall carbon nanotubes and carbon black,
   b. two copper electrodes attached to the electrically conductive matrix, and
   c. one sheet of reinforcing material consisting of glass fibre fabric,
b) a polymer consisting of a phenolic resin prepreg,

wherein one side of the copper electrodes comprises a layer of glass fibre fabric or glass filament mat embedded in at least one layer of a screen printed non-conductive silicone matrix made of RTV silicone, and the other side is covered with at least one layer of screen printed conductive silicone adhesive, which is attached to the electrically conductive matrix,
wherein the heating assembly a) is embedded by the polymer b),
wherein the electrically conductive matrix is manufactured by screen printing of the room temperature vulcanizing silicone, and
wherein the heating assembly is perforated.

In a preferred embodiment, the conductive filler consists of multiwall carbon nanotubes. In another preferred embodiment, the conductive filler consists of a mixture of multiwall carbon nanotubes and carbon black.

A specific realization of this embodiment is disclosed in Examples 1 and 2. Figure 4 is a schematic representation of this embodiment.

In a preferred embodiment, the heating composite element comprises:
a) a heating assembly consisting of:
   a. an electrically conductive matrix comprising:
      i. a cured room temperature vulcanizing silicone, and
      ii. a conductive filler selected from a group consisting of
         1. multiwall carbon nanotubes and
         2. a mixture of multiwall carbon nanotubes and carbon black,
   b. two copper electrodes integrated in one sheet of reinforcing material consisting of glass fibre fabric and attached to the electrically conductive matrix,
b) a polymer consisting of a phenolic resin prepreg,

wherein the heating assembly a) is embedded by the polymer b),
wherein the electrically conductive matrix is manufactured by screen printing of the room temperature vulcanizing silicone, and
wherein the heating assembly is perforated.

In a preferred embodiment, the conductive filler consists of multiwall carbon nanotubes. In another preferred embodiment, the conductive filler consists of a mixture of multiwall carbon nanotubes and carbon black.

A specific realization of this embodiment is disclosed in Examples 3 and 4. Figure 5 is a schematic representation of this embodiment.

In a preferred embodiment, the heating composite element comprises:
a) a heating assembly consisting of:
   a. an electrically conductive matrix comprising:
      i. a cured room temperature vulcanizing silicone, and
      ii. a conductive filler selected from a group consisting of
         1. multiwall carbon nanotubes and
         2. a mixture of multiwall carbon nanotubes and carbon black,
   b. two copper electrodes attached to the electrically conductive matrix, and
   c. one sheet of reinforcing material,
b) a polymer selected from the group consisting of thermoplastic polymer, acrylate resin, phenolic resin, and epoxy resin,

wherein the cooper electrodes are adhesivated and stuck to the sheet of reinforcing material,
wherein the heating assembly a) is embedded by the polymer b),
wherein the electrically conductive matrix is manufactured by screen printing of the room temperature vulcanizing silicone, and
wherein the heating assembly is perforated.

In a preferred embodiment the embedding polymer is an acrylate resin. In another preferred embodiment the reinforcing material is glass fibre fabric. In a preferred embodiment, the conductive filler consists of multiwall carbon nanotubes. In another preferred embodiment, the conductive filler consists of a mixture of multiwall carbon nanotubes and carbon black.

A specific realization of this embodiment is disclosed in Examples 5 and 6. Figure 6 is a schematic representation of this embodiment.

In a preferred embodiment, the heating composite element comprises:
a) a heating assembly consisting of:
   a. an electrically conductive matrix comprising:
      i. a cured room temperature vulcanizing silicone, and
      ii. a conductive filler selected from a group consisting of
         1. multiwall carbon nanotubes and
         2. a mixture of multiwall carbon nanotubes and carbon black,
   b. two copper electrodes attached to the electrically conductive matrix, and
   c. two sheets of PET as reinforcing material placed at the top and at the bottom of the heating assembly,
b) a polymer selected from the group consisting of thermoplastic polymer, acrylate resin, phenolic resin, and epoxy resin,

wherein the electrodes are attached by means of an adhesive to the PET reinforcing material at the bottom of the heating assembly,
wherein the PET reinforcing material is placed at the bottom of the heating assembly by means of a silicone adhesive,
wherein the heating assembly a) is embedded by the polymer b),
wherein the electrically conductive matrix is manufactured by screen printing of the room temperature vulcanizing silicone, and
wherein the heating assembly is perforated.

A schematic view of this embodiment is shown in Figure 7, and a realization of this embodiment is disclosed in Example 7. In a preferred embodiment, the conductive filler consists of multiwall carbon nanotubes. In another preferred embodiment, the conductive filler consists of a mixture of multiwall carbon nanotubes and carbon black.

### Use the heating composite element

The use of the heating composite element of the invention as heating system is an aspect of the object of the invention.

The heating composite element of the invention may be used in flooring heating, wall heating, aircraft de-icing, train de-icing, tank heating, and ship panel heating.

A further advantage of the invention is the possibility to embed the heaters in acrylate polymers that imitate stone surfaces, open to the possibility of creating tailormade designs for decorative purposes. Interior designers can offer both efficient heaters and decorative, as alternative to standard radiating systems that require complex installations with great impact from aesthetic point of view. The embedding of the heaters of the invention are perfectly compatible with the manufacturing process of these acrylate decorative composite units.

In flooring heating, a specific power of the heating composite element below 0.1 W/cm² provides a surface temperature of below 80º C.

Embedding the heating composite element into aircraft bodies removes the need for expensive and inefficient de-icing in airports.

The heating composite element of the invention shows the following advantages: modular system, easy manufacture, equilibrium temperature reached in very fast, resistance to thermal variations without crack or deformation, high tear strength of the heater element, providing advantages in the handling of the heater in tile production, homogenous and stable heating, better adjustment of the electrical power range, reduction the risk of internal delamination, and suitable electrical insulation.

In fact, one of the main advantages of the heating composite element of the invention is the complete integration within composite components that are present, for example, in aircrafts, windmills, or transportation. The drilled heating assembly is flexible enough to be adapted to different shapes, and even to complex shaped structures. Efficient and flexible are specific features of the heating assembly suitable to be embedded in a wide range of polymers, which are used in end applications without experiencing delamination defects.

Surprisingly, in spite of the simple manufacturing process, the heating composite element maintains the electrical parameters after thermal and impact cycling. Further, it does not show any delamination between the embedding polymer and the heater assembly after testing. A relevant feature is that the isolating edges surrounding the heater were also properly bonded by the embedding polymer.

Moreover, the heating composite element of the invention does not have any limitation in format size. Technologically, its size depends only on the size of the screen printer and on the width of the oven to vulcanize the RTV silicone.

Finally, the embedding of the heater inside the composite units as it has been defined, does not alter at all the composite manufacturing process. Due to the bores and to the reinforcing glass or thermoplastic polymer, the heater is not a strange component of the final composite unit. Those skilled in the art will not have to change its processing way and on the opposite, they will have more possibilities to introduce the final product in the market.

In the following examples, particular embodiments of the composition of the invention are shown.

### Examples

### Preparative Example 1: Preparation of an electrically conductive matrix with MWCNT and carbon black

An electrically conductive matrix was prepared by using two component room temperature Pt catalysed vulcanizing silicone (RTV), comprising Part A and Part B.

The process comprised mixing 400 g of Part A of RTV, ESA-7244A (Elkem), with 44 g of acetylene carbon black and 7 g of multiwall carbon nanotube (MWCNT), NC7000 (Nanocyl), at 100 rpm using a mechanical stirrer for 15 minutes. A black high viscous slurry was obtained.

400 g of Part B of RTV, ESA-7244B (Elkem), was mixed with 44 g of acetylene carbon black and 7 g of multiwall carbon nanotube (MWCNT), NC7000 (Nanocyl), at 100 rpm using a mechanical stirrer for 15 minutes. A black high viscous slurry was obtained.

Each slurry was refined separately using a Torrey-Hills 3 roll mill (TRM) with 20 microns gauge between rollers to remove agglomerates. Two high fibrous conductive compounds were obtained which were mixed with 900 g of xylene to at least 10000 rpm for about 6 h up to complete homogenization and absence of aggregates.

### Preparative Example 2: Preparation of an electrically conductive matrix with MWCNT

An electrically conductive matrix was prepared by mixing 485 g of Part A of a room temperature Pt catalysed vulcanizing silicone (RTV), ESA-7244A (Elkem), with 15 g of multiwall carbon nanotube (MWCNT), NC7000 (Nanocyl), at 100 rpm using a mechanical stirrer for 15 minutes. A black high viscous slurry was obtained.

485 g of Part B of RTV, ESA-7244B (Elkem), was mixed with 15 g of multiwall carbon nanotube (MWCNT), CN7000 (Nanocyl), at 100 rpm using a mechanical stirrer for 15 minutes. A black high viscous slurry was obtained.

Each slurry was refined separately using a Torrey-Hills 3 roll mill (TRM) with 20 microns gauge between rollers to remove agglomerates. Two high fibrous conductive compounds were obtained which were mixed with 1857 g of xylene to at least 10000 rpm for about 6 h up to complete homogenization and absence of aggregates.

### Preparative Example 3: Preparation of an isolating silicone elastomer resin

An isolating silicone elastomer resin was prepared by mixing 800 g of Part A of an RTV Pt-catalysed silicone, ESA-7231 (Elkem) with 80 g of Part B of an RTV Pt-catalysed silicone, ESA-7231 (Elkem), and 120 g of xylene at 100-200 rpm for 30 minutes. The air entrapped inside the silicone was removed by vacuum.

### Preparative Example 4: Preparation of a conductive silicone adhesive gel

An electrically conductive silicone adhesive gel was prepared by using a two component room temperature Pt catalysed vulcanizing silicone (RTV), comprising Part A and Part B. That silicone elastomer that crosslinked at room temperature by polyaddition reaction. The silicone material comprised two low viscous liquid components, which once mixed and cured, transformed into an elastic and resistant gel. Part A comprised the Pt catalyst, and Part B SiH functional groups.

The process comprised mixing 485 g of Part A of RTV, RTGEL 4645 (Elkem), with 15 g of multiwall carbon nanotube (MWCNT), NC7000 (Nanocyl), at 100 rpm using a mechanical stirrer for 15 minutes. A black high viscous slurry was obtained.

485 g of Part B of RTV, RTGEL 4645 (Elkem), was mixed with 15 g of multiwall carbon nanotube (MWCNT), CN7000 (Nanocyl), at 100 rpm using a mechanical stirrer for 15 minutes. A black high viscous slurry was obtained.

Each slurry was refined separately using a Torrey-Hills 3 roll mill (TRM) with 20 microns gauge between rollers to remove agglomerates. Two high fibrous conductive compounds were obtained which were mixed with 1857 g of xylene to at least 10000 rpm for about 6 h up to complete homogenization and absence of aggregates.

Once the conductive silicone adhesive gel was vulcanised showed a tacky surface that allows to stick and unstick coated surfaces.

### Preparative Example 5: Preparation of a reinforced electrode

A reinforced adhesivated electrode consists schematically on a copper foil reinforced with fiberglass cloth impregnated with an isolating silicone elastomer on one side, and a conductive silicone adhesive on the other side. That electrode was prepared according to the following process.

One side of a soft annealed copper foil having a thickness of 35 µm and a size of 530 mm x 530 mm (Car Schlenk) was coated with a thin and uniform film of an adhesion promoter, for example, Bluesil Primer 131, by using a brush or a dry cloth. After 5 minutes, a first layer of the isolating silicone elastomer prepared in Preparative Example 3 was screen printed using a Thieme Flat bed screen printer with sliding table. A fiberglass cloth Style 1080 (Isola), as reinforcing element, was placed on the fresh screen printed silicone elastomer resin to be fully impregnated. A second layer of the isolating silicone elastomer resin was screen printed. Afterwards, the elastomer was vulcanized at a temperature comprised between 110º C and 120º C for 2 minutes. The coating had a thickness of about 150 - 200 µm. A thin layer of a low surface friction coating, for example, Topcoat HE (Momentive), was applied by brush on the coated reinforced copper foil, and vulcanized at a temperature comprised between 120º C and 130º C for 2 minutes.

The other side of the soft annealed copper foil was screen printed with three layers of the electrically conductive silicone adhesive gel prepared according to the Preparative Example 4, using a Thieme Flat bed screen printer with sliding table. The coating had a thickness of about 150 - 200 µm.

The adhesivated reinforced copper electrode obtained using that process was suitable to be cut in stripes, for example, and to be incorporated to an electrically conductive matrix. In an embodiment the dimensions of the stripes were 8 mm width and 345 mm length.

### Preparative Example 6: Preparation of a non-reinforced electrode

A non-reinforced electrode was prepared from a soft annealed copper foil having a thickness of 35 µm and a size of 530 mm x 530 mm (Car Schlenk) screen printed with three layers of the electrically conductive silicone adhesive gel prepared according to the Preparative Example 4, using a Thieme Flat bed screen printer with sliding table. The coating had a thickness of about 150 - 200 µm.

### Preparative Example 7: Preparation of a silicone adhesive

A silicone adhesive was prepared by using a two component room temperature Pt catalysed vulcanizing silicone (RTV), comprising Part A and Part B.

485 g of Part A of RTV was mixed with 485 g of Part B RVT during 15 minutes. The air entrapped inside the silicone was removed by vacuum.

### Example 1: Phenolic resin composite heater with reinforced electrode

A phenolic resin composite heater including a reinforced electrode was prepared by the following process.

A fiberglass cloth Style 7628 (Isola) of 530 mm x 530 mm was screen printed with three layers of the electrically conductive matrix prepared according to Preparative Example 2, using a Thieme Flat bed screen printer with sliding table. The coating thickness was 120 µm. It was vulcanized at a temperature comprised between 110º C and 120º C.

A surface of size 345 mm x 345 mm of the reinforced electrically conductive matrix was drilled uniformly to make bores, for example, rectangular or circular bores as shown schematically in Figures 3a and 7b.

Two stripes of the adhesivated reinforced copper electrode foil obtained according to Preparative Example 5, having the size of 8 mm width and 345 mm length were stuck parallel on the boundaries of the drilled reinforced electrically conductive matrix of size 345 mm x 345 m, as shown schematically in Figure 1.

Two wiring cables as connecting pad were welded on the surface of the electrodes.

The heating assembly was ready to be embedded in a phenolic resin, according to the following process.

The heating assembly was embedded by a high pressure lamination process, wherein a standard phenolic resin prepreg, Nuvotec Prepreg PGW 300-02 LZ was used at a temperature about 140º C and a pressure of 4.4 bar. These conditions allowed a uniform phenolic resin flow to fill the internal bores of the heating assembly during the press cycle. Figure 4 is a schematic representation of this embodiment.

The embedded heating composite element was used for floor heating. The features of the heating element are shown in Table 1:

**TABLE 1**

| Parameter | Value |
|---|---|
| Dimensions | 365 mm x 385 mm |
| Area | 1405 cm² |
| Voltage | 230 V (AC) |
| Intensity | 1.7 A |
| Resistance | 407 Ohms |
| Power | 130 W |
| Specific power | 0.09 W/cm² |
| Surface temperature | 70º C - 80º C |
| Thermal cycling | 30 min HOT / 30 min COLD |
| Number of cycles | 500 |
| Power after cycling | 132 W |
| Power after 2 ball impact 250/500 cycles | 130 W |

No changes were observed in electrical parameters after thermal and impact cycling. the phenolic resin prepregs fully impregnated the heating assembly obtaining a composite showing a good integrity. No delamination was observed between the phenolic resin and the heater assembly after testing. Further, the isolating edges surrounding the heater were also properly bonded.

### Example 2: Phenolic resin composite heater with reinforced electrode

A phenolic resin composite heater including a reinforced electrode was prepared using substantially the process of Example 1, but using the electrically conductive matrix prepared according to Preparative Example 1.

The features of the embedded heating composite element were analogous to those obtained according to Example 1.

### Example 3: Phenolic resin composite heater with integrated reinforced electrode

A phenolic resin composite heater including a reinforced electrode was prepared according to the following process.

A sheet of copper electrodes integrated in fiberglass cloth (Tisstech) of size 100 mm x 29.5 mm was screen printed with three layers of the electrically conductive matrix prepared according to Preparative Example 2, using a Thieme Flat bed screen printer with sliding table. The coating thickness was 120 µm. It was vulcanized at a temperature comprised between 110º C and 120º C.

The coated integrated reinforced copper electrode sheet was drilled uniformly to make bores, for example, rectangular as shown schematically in Figure 7c.

Two wiring cables as connecting pad were welded on the surface of the electrodes.

The heating assembly was ready to be embedded in a phenolic resin, according to the following process.

The heating assembly was embedded by a high pressure lamination process, wherein a standard phenolic resin prepreg, Nuvotec Prepreg PGW 300-02 LZ was used at a temperature about 140º C and a pressure of 4.4 bar. These conditions allowed a uniform phenolic resin flow to fill the internal bores of the heating assembly during the press cycle. Figure 5 is a schematic representation of this embodiment.

The embedded heating composite element was used for floor heating. The features of the heating element are shown in Table 2:

**TABLE 2**

| Parameter | Value |
|---|---|
| Dimensions | 100 mm x 292 mm |
| Area | 292 cm² |
| Voltage | 24 V (AC) |
| Intensity | 1.37 A |
| Resistance | 33 Ohms |
| Power | 17.4W |
| Specific power | 0.06 W/cm² |
| Surface temperature | 50-60º C |
| Thermal endurance | 100 h |
| Power after cycling | 17-18 W |

It was observed that the heater assembly produced with integrated copper electrodes in the glass fibre fabric showed analogous performance to the other heater assemblies comprising other type of electrodes. After 100 h working to test thermal endurance, the power remained at the same initial value. This kind of electrodes represents an alternative to attached reinforced electrodes and non-reinforced electrodes, simplifying the manufacturing process of the heater assembly.

### Example 4: Phenolic resin composite heater with integrated reinforced electrode

A phenolic resin composite heater with integrated reinforced electrode was prepared using substantially the process of Example 3, but using the electrically conductive matrix prepared according to Preparative Example 1.

The features of the embedded heating composite element were analogous to those obtained according to Example 3.

### Example 5: Acrylic composite heater with adhesivated electrode

An acrylic composite heater including an adhesivated electrode was prepared according to the following process.

On the boundaries of a fiberglass sheet Style 7628 (Isola) of size 450 mm x 580 mm two stripes of copper electrodes of 10 mm width and 580 mm length were stuck with a standard acrylic adhesive in a parallel layout, with a separation of 450 mm between both electrodes.

The fiberglass cloth with the electrodes was screen printed with three layers of the electrically conductive matrix prepared according to Preparative Example 2, using a Thieme Flat bed screen printer with sliding table. The coating thickness was 200 µm. It was vulcanized at a temperature comprised between 110º C and 120º C.

A surface of size 450 mm x 450 mm of the reinforced electrically conductive matrix was drilled uniformly to make bores, for example, rectangular or circular bores as shown schematically in Figures 3a and 7b.

Two wiring cables as connecting pad were welded on the surface of the electrodes.

The heating assembly was ready to be embedded in an acrylic resin, by using a hand lay lamination process. In that process, first of all a silicone mould was manufactures to reproduce the surface of the heating assembly. Several layers of acrylic resin, for example, AC100 (Jesmonite) was poured uniformly on the base of the mould including glass reinforcements after each layer. In the middle of the height of the mould is placed the heating assembly, wherein the wires went out of the composite. Additional layers of acrylic resin and reinforcement led to the embedded heating acrylic composite element. Figure 6 represents schematically this embodiment.

The embedded heating composite element was used for floor heating. The features of the heating element are shown in Table 3:

**TABLE 3**

| Parameter | Value |
|---|---|
| Dimensions | 540 mm x 450 mm |
| Area | 2430 cm² |
| Voltage | 230 V (AC) |
| Intensity | 1 A |
| Resistance | 230 Ohms |
| Power | 230 W |
| Specific power | 0.094 W/cm² |
| Surface temperature | 70º C - 80º C |
| Thermal endurance | 100 h |
| Power after thermal endurance | 230 W |

It was observed that the acrylic composite kept the integrity after thermal endurance tested during 100 h of working. No cracks on the surface were observed and the heating composite element remained flat.

### Example 6: Acrylic composite heater with adhesivated electrode

An acrylic composite heater including an adhesivated electrode was prepared using substantially the process of Example 5, but using the electrically conductive matrix prepared according to Preparative Example 1.

The features of the embedded heating composite element were analogous to those obtained according to Example 5.

### Example 7: Thermoplastic composite heater with adhesivated electrode

A thermoplastic composite heater including an adhesivated electrode was prepared according to the following process.

On the boundaries of a PET foil of size 500 mm x 1000 mm two stripes of copper electrodes of 10 mm width and 840 mm length were stuck with a standard acrylic adhesive in a parallel layout with a separation of 330 mm between both electrodes.

The PET foil with the electrodes was screen printed with two layers of the electrically conductive matrix prepared according to Preparative Example 2, using a Thieme Flat bed screen printer with sliding table. The coated surface was 330 mm x 840 mm. The coating thickness was 100 µm. It was vulcanized at a temperature comprised between 110º C and 120º C. This assembly with electrodes was named PET 1.

A PET foil of 770 mm x 900 mm was screen printed with two layers of the silicone adhesive prepared according to Preparative Example 7, using a Thieme Flat bed screen printer with sliding table. The coating thickness was 50 µm. It was vulcanized at a temperature comprised between 110º C and 120º C. This assembly was named PET 2.

Both finished PET 1 and PET 2 were put together: adhesivated side of PET 2 in contact with conductive side of PET 1, and laminated under pressure between rubber rolls, to remove any air left inside and ensure maximum contact between layers. The sandwich was pressed at 1 bar and at a temperature of 70º C between two aluminium plates during 15 minutes with soft pressing pads.

The sandwich was drilled uniformly to make bores, for example, rectangular or circular bores as shown schematically in Figures 3a and 7b. Two wiring cables as connecting pad were welded to the electrodes

The heating assembly was ready to be embedded in an acrylic resin, epoxy resin or polyester resin, by using a hand lay lamination process, as disclosed in Example 5. Figure 7 represents schematically this embodiment.

The electrical power of the PET sandwich bonded to an aluminium plate with an acrylic adhesive was 170 W, which remained substantially unmodified after 500 h working. No delamination was observed between heater layers.

### Example 8: Epoxy composite heater with reinforced electrode

An epoxy composite heater including a reinforced electrode was prepared using substantially the process disclosed in Example 2, but using MTM^{®} 348 FR (Solvay). as epoxy prepreg, instead of a phenolic resin prepreg.

No changes were observed in electrical parameters after thermal and impact cycling. the epoxy prepregs fully impregnated the heating assembly obtaining a composite showing a good integrity. No delamination was observed between the epoxy resin and the heater assembly after testing. Further, the isolating edges surrounding the heater were also properly bonded.

### Example 9: Epoxy composite heater with reinforced electrode by hand lamination

An epoxy composite heater including a reinforced electrode was prepared by the following process.

A combination of a layer of fiberglass cloth Style 7628 (Isola) of 530 mm x 530 mm and glass filament mat of 300 g/m² was screen printed with three layers of the electrically conductive matrix prepared according to Preparative Example 2, using a Thieme Flat bed screen printer with sliding table. The coating thickness was 120 µm. It was vulcanized at a temperature comprised between 110º C and 120º C.

Two stripes of the adhesivated reinforced copper electrode foil obtained according to Preparative Example 5, having the size of 8 mm width and 345 mm length were stuck parallel on the boundaries reinforced electrically conductive matrix of size 345 mm x 345 m, as shown in Figure 1a.

Two wiring cables as connecting pad were welded on the surface of the electrodes.

A combination of a layer of fiberglass cloth Style 7628 (Isola) of 530 mm x 530 mm and glass filament mat of 300 g/m² was placed on top of the electrically conductive matrix comprising the electrodes.

A surface of size 345 mm x 345 mm of the reinforced electrically conductive matrix was drilled uniformly to make bores, for example, rectangular or circular bores as shown in Figures 3a and 7b.

The heating assembly was embedded by epoxy resin infusion IN2 (Easy Composites) according to a process substantially analogue to that disclosed in Example 5. Vacuum was applied to remove any air inside the composite and to ensure minimum pressure in the sandwich during curing. After 24 h at room temperature, a composite without any air bubbles and good bonding across the bores was obtained.

## Claims

1. A heating composite element comprising a heating assembly embeded in a polymer;
the
heating assembly consisting of an electrically conductive matrix, at least two electrodes attached to the electrically conductive matrix, and at least one sheet of reinforcing material;
wherein the electrically conductive matrix comprises
a cured room temperature vulcanizing silicone, and a conductive filler selected from a group consisting of multiwall carbon nanotubes and a mixture of multiwall carbon nanotubes and carbon black;
wherein the
polymer is selected from a group consisting of thermoplastic polymer, acrylate resin, phenolic resin, and epoxy resin;
wherein the electrically conductive matrix is manufactured by screen printing of the room temperature vulcanizing silicone; and
wherein the heating assembly is perforated.

2. The heating composite element according to claim 1, wherein the content of the room temperature vulcanizing silicone in the electrically conductive matrix is comprised between 80 wt.% and 99.5 wt.% on the solid content of the electrically conductive matrix.

3. The heating composite element according to claims 1 or 2, wherein the conductive filler is multiwall carbon nanotubes.

4. The heating composite element according to claim 3, wherein the content of multiwall carbon nanotubes is comprised between 0.5 wt.% and 8wt.% on the solid content of the electrically conductive matrix.

5. The heating composite element according to claims 1 or 2 wherein the conductive filler is a mixture of multiwall carbon nanotubes and carbon black.

6. The heating composite element according to claim 5, wherein the content of multiwall carbon nanotubes is comprised between 0.5 wt.% and 8wt.% on the solid content of the electrically conductive matrix, and the content of carbon black is comprised between 2 wt.% and 18 wt.% on the solid content of the electrically conductive matrix.

7. The heating composite element according to any of claims 1 to 6, wherein the electrodes are made of copper, silver or aluminium, preferably copper.

8. The heating composite element according to claim 7, wherein the basis of the electrodes is metallic foil, metallic cloth or screen printed metallic conductor.

9. The heating composite element according to claim 8, wherein the copper electrodes, made of copper foil, are adhesivated with an adhesive, attached to a sheet of a reinforcing material selected from a thermoplastic polymer, a glass fibre fabric, and a glass filament mat.

10. The heating composite element according to claim 8, wherein on one side of the copper electrodes, made of copper foil, it is attached a reinforcement and the other side is coated by at least one layer of conductive room temperature vulcanizing silicone adhesive.

11. The heating composite element according to claim 8, wherein the copper electrodes are made of copper cloth integrated in glass fibre fabric.

12. The heating composite element according to any of claims 1 to 11, wherein the reinforcing material is selected from a group consisting of glass fibre fabric, glass filament mat, and thermoplastic polymer.

13. A method of preparing the heating composite element of any of claims 1 to 12, wherein the method comprises:
manufacturing of the heating assembly, and
embedding the heating assembly by a polymer selected from the group consisting of thermoplastic polymer, acrylate resin, phenolic resin, and epoxy resin; wherein manufacturing of the heating assembly comprises:
a) mixing a room temperature vulcanizing silicone and a conductive filler selected from a group consisting of multiwall carbon nanotubes and a mixture of multiwall carbon nanotubes and carbon black,
b) either i) screen printing the mixture obtained in step a) on at least one sheet of reinforcing material, ii) curing the screen printed material, and iii) attaching at least two copper electrodes to the cured screen printed material to obtain a cured assembly, or
i) screen printing the mixture obtained in step a) on at least one sheet of reinforcing material, ii) curing the screen printed material, and iii) screen printing of a paste comprising a polymer and copper particles on the cured screen printed material to obtain a cured assembly, or
i) attaching at least two copper electrodes to at least one sheet of reinforcing material, ii) screen printing the mixture obtained in step a) on at least one sheet of reinforcing material comprising at least two copper electrodes, and iii) curing the screen printed material to obtain a cured assembly, or
i) screen printing the mixture obtained in step a) on at least one sheet of reinforcing material comprising at least two integrated copper electrodes, and ii) curing the screen printed material to obtain a cured assembly,
c) drilling the region comprised between the electrodes of the cured assembly obtained in step b), and
d) welding wiring cables to the electrodes surface.

14. Use of the heating composite element of any of claims 1 to 12 as heating system.

15. Use of the heating composite element according to claim 14 as heating system in flooring heating, wall heating, aircraft de-icing, train de-icing, tank heating, ship panel heating.

## Patentansprüche

1. Heizverbundelement, umfassend eine in ein Polymer eingebettete Heizbaugruppe;
wobei die Heizbaugruppe aus einer elektrisch leitfähigen Matrix, mindestens zwei an der elektrisch leitfähigen Matrix angebrachten Elektroden und mindestens einer Schicht aus Verstärkungsmaterial besteht;
wobei die elektrisch leitfähige Matrix ein gehärtetes, bei Raumtemperatur vulkanisierendes Silikon und einen leitfähigen Füllstoff, ausgewählt aus einer Gruppe, bestehend aus mehrwandigen Kohlenstoff-Nanoröhrchen und einer Mischung aus mehrwandigen Kohlenstoff-Nanoröhrchen und Ruß, umfasst;
wobei das Polymer ausgewählt ist aus einer Gruppe, bestehend aus thermoplastischem Polymer, Acrylatharz, Phenolharz und Epoxidharz;
wobei die elektrisch leitfähige Matrix durch Siebdrucken des bei Raumtemperatur vulkanisierenden Silikons gefertigt wird und
wobei die Heizbaugruppe perforiert ist.

2. Heizverbundelement nach Anspruch 1, wobei der Gehalt an dem bei Raumtemperatur vulkanisierenden Silikon in der elektrisch leitfähigen Matrix zwischen 80 Gew.-% und 99,5 Gew.-% des Feststoffgehalts der elektrisch leitfähigen Matrix umfasst.

3. Heizverbundelement nach Anspruch 1 oder 2, wobei der leitfähige Füllstoff mehrwandige Kohlenstoff-Nanoröhrchen sind.

4. Heizverbundelement nach Anspruch 3, wobei der Gehalt an mehrwandigen Kohlenstoffnanoröhrchen zwischen 0,5 Gew.-% und 8 Gew.-% des Feststoffgehalts der elektrisch leitfähigen Matrix umfasst.

5. Heizverbundelement nach Anspruch 1 oder 2, wobei der leitfähige Füllstoff eine Mischung aus mehrwandigen Kohlenstoff-Nanoröhrchen und Ruß ist.

6. Heizverbundelement nach Anspruch 5, wobei der Gehalt an den mehrwandigen Kohlenstoff-Nanoröhrchen zwischen 0,5 Gew.-% und 8 Gew.-% des Feststoffgehalts der elektrisch leitfähigen Matrix umfasst und der Gehalt an Ruß zwischen 2 Gew.-% und 18 Gew.-% des Feststoffgehalts der elektrisch leitfähigen Matrix umfasst.

7. Heizverbundelement nach einem der Ansprüche 1 bis 6, wobei die Elektroden aus Kupfer, Silber oder Aluminium, vorzugsweise Kupfer, hergestellt sind.

8. Heizverbundelement nach Anspruch 7, wobei die Basis der Elektroden Metallfolie, Metalltuch oder siebgedruckter metallischer Leiter ist.

9. Heizverbundelement nach Anspruch 8, wobei die aus Kupferfolie hergestellten Kupferelektroden mit einem Klebstoff verklebt sind, befestigt an einer Schicht aus einem Verstärkungsmaterial, das aus einem thermoplastischen Polymer, einem Glasfasergewebe und einer Glasfilamentmatte ausgewählt ist.

10. Heizverbundelement nach Anspruch 8, wobei auf einer Seite der aus Kupferfolie hergestellten Kupferelektroden eine Verstärkung angebracht ist und die andere Seite mit mindestens einer Schicht aus leitfähigem, bei Raumtemperatur vulkanisierendem Silikonklebstoff beschichtet ist.

11. Heizverbundelement nach Anspruch 8, wobei die Kupferelektroden aus in Glasfasergewebe eingearbeitetem Kupfertuch hergestellt sind.

12. Heizverbundelement nach einem der Ansprüche 1 bis 11, wobei das Verstärkungsmaterial ausgewählt ist aus einer Gruppe, bestehend aus Glasfasergewebe, Glasfilamentmatte und thermoplastischem Polymer.

13. Verfahren zur Herstellung des Heizverbundelements nach einem der Ansprüche 1 bis 12, wobei das Verfahren Folgendes umfasst:
Fertigen der Heizbaugruppe und
Einbetten der Heizbaugruppe in ein Polymer, ausgewählt aus der Gruppe, bestehend aus thermoplastischem Polymer, Acrylatharz, Phenolharz und Epoxidharz;
wobei das Fertigen der Heizbaugruppe Folgendes umfasst:
a) Mischen eines bei Raumtemperatur vulkanisierenden Silikons und eines leitfähigen Füllstoffs, der ausgewählt ist aus einer Gruppe, bestehend aus mehrwandigen Kohlenstoff-Nanoröhrchen und einer Mischung aus mehrwandigen Kohlenstoff-Nanoröhrchen und Ruß,
b) entweder i) Siebdrucken der in Schritt a) erhaltenen Mischung auf mindestens eine Schicht aus Verstärkungsmaterial, ii) Härten des siebgedruckten Materials und iii) Anbringen von mindestens zwei Kupferelektroden an dem gehärteten siebgedruckten Material, um eine gehärtete Baugruppe zu erhalten, oder
i) Siebdrucken der in Schritt a) erhaltenen Mischung auf mindestens eine Schicht aus Verstärkungsmaterial, ii) Härten des siebgedruckten Materials und iii) Siebdrucken
einer Paste, die ein Polymer und Kupferpartikel umfasst, auf das gehärtete siebgedruckte Material, um eine gehärtete Baugruppe zu erhalten, oder
i) Anbringen von mindestens zwei Kupferelektroden an mindestens einer Schicht aus Verstärkungsmaterial, ii) Siebdrucken der in Schritt a) erhaltenen Mischung auf mindestens eine Schicht aus Verstärkungsmaterial, die mindestens zwei Kupferelektroden umfasst, und iii) Härten des siebgedruckten Materials, um eine gehärtete Baugruppe zu erhalten, oder
i) Siebdrucken der in Schritt a) erhaltenen Mischung auf mindestens eine Schicht aus Verstärkungsmaterial, die mindestens zwei eingearbeitete Kupferelektroden umfasst, und ii) Härten des siebgedruckten Materials, um eine gehärtete Baugruppe zu erhalten,
c) Bohren des Bereichs zwischen den Elektroden der in Schritt b) erhaltenen gehärteten Baugruppe und
d) Schweißen von Verdrahtungskabeln an die Elektrodenoberfläche.

14. Verwendung des Heizverbundelements nach einem der Ansprüche 1 bis 12 als Heizsystem.

15. Verwendung des Heizverbundelements nach Anspruch 14 als Heizsystem für Fußbodenheizung, Wandheizung, Flugzeugenteisung, Zugenteisung, Tankheizung, Flächenheizung für Schiffe.

## Revendications

1. Élément composite chauffant comprenant un ensemble chauffant inclus dans un polymère ;
l'ensemble chauffant étant constitué par une matrice électroconductrice, au moins deux électrodes fixées à la matrice électroconductrice, et au moins une feuille de matériau de renforcement ;
dans lequel la matrice électroconductrice comprend un silicone vulcanisant à température ambiante durci, et une charge conductrice choisie dans un groupe constitué par des nanotubes de carbone multiparois et un mélange de nanotubes de carbone multiparois et de noir de carbone ;
dans lequel le polymère est choisi dans un groupe constitué par un polymère thermoplastique, une résine acrylique, une résine phénolique, et une résine époxy ;
dans lequel la matrice électroconductrice est fabriquée par sérigraphie du silicone vulcanisant à température ambiante ; et
dans lequel l'ensemble chauffant est perforé.

2. Élément composite chauffant selon la revendication 1, dans lequel la teneur en silicone vulcanisant à température ambiante dans la matrice électroconductrice est comprise entre 80 % en poids et 99,5 % en poids sur la teneur en solides de la matrice électroconductrice.

3. Élément composite chauffant selon les revendications 1 ou 2, dans lequel la charge conductrice est des nanotubes de carbone à parois multiples.

4. Élément composite chauffant selon la revendication 3, dans lequel la teneur en nanotubes de carbone multiparois est comprise entre 0,5 % en poids et 8 % en poids sur la teneur en solides de la matrice électroconductrice.

5. Élément composite chauffant selon les revendications 1 ou 2, dans lequel la charge conductrice est un mélange de nanotubes de carbone multiparois et de noir de carbone.

6. Élément composite chauffant selon la revendication 5, dans lequel la teneur des nanotubes de carbone multiparois est comprise entre 0,5 % en poids et 8 % en poids sur la teneur en solides de la matrice électroconductrice, et la teneur en noir de carbone est comprise entre 2 % en poids et 18 % en poids sur la teneur en solides de la matrice électroconductrice.

7. Élément composite chauffant selon l'une quelconque des revendications 1 à 6, dans lequel les électrodes sont en cuivre, argent ou aluminium, de préférence en cuivre.

8. Élément composite chauffant selon la revendication 7, dans lequel la base des électrodes est une feuille métallique, un tissu métallique ou un conducteur métallique sérigraphié.

9. Élément composite chauffant selon la revendication 8, dans lequel les électrodes de cuivre, en feuille de cuivre, sont collées avec un adhésif, fixées à une feuille d'un matériau de renforcement choisi parmi un polymère thermoplastique, un tissu de fibres de verre, et un mat de filaments de verre.

10. Élément composite chauffant selon la revendication 8, dans lequel sur un côté des électrodes de cuivre, en feuille de cuivre, est fixé un renforcement et l'autre côté est revêtu d'au moins une couche d'adhésif de silicone vulcanisant à température ambiante conducteur.

11. Élément composite chauffant selon la revendication 8, dans lequel les électrodes de cuivre sont en tissu de cuivre intégré dans un tissu de fibres de verre.

12. Élément composite chauffant selon l'une quelconque des revendications 1 à 11, dans lequel le matériau de renforcement est choisi dans un groupe constitué par un tissu de fibres de verre, un mat de filaments de verre, et un polymère thermoplastique.

13. Procédé de préparation de l'élément composite chauffant selon l'une quelconque des revendications 1 à 12, dans lequel le procédé comprend :
la fabrication de l'ensemble chauffant, et
l'inclusion de l'ensemble chauffant par un polymère choisi dans le groupe constitué par un polymère thermoplastique, une résine acrylique, une résine phénolique, et une résine époxy ;
dans lequel la fabrication de l'ensemble chauffant comprend :
a) le mélange d'un silicone vulcanisant à température ambiante et d'une charge conductrice choisie dans un groupe constitué par des nanotubes de carbone multiparois et un mélange de nanotubes de carbone multiparois et de noir de carbone,
b) soit i) la sérigraphie du mélange obtenu à l'étape a) sur au moins une feuille de matériau de renforcement, ii) le durcissement du matériau sérigraphié, et iii) la fixation d'au moins deux électrodes de cuivre sur le matériau sérigraphié durci pour obtenir un ensemble durci, soit i) la sérigraphie du mélange obtenu à l'étape a) sur au moins une feuille de matériau de renforcement, ii) le durcissement du matériau sérigraphié, et iii) la sérigraphie
d'une pâte comprenant un polymère et des particules de cuivre sur le matériau sérigraphié durci pour obtenir un ensemble durci, soit
i) la fixation d'au moins deux électrodes de cuivre sur au moins une feuille de matériau de renforcement, ii) la sérigraphie du mélange obtenu à l'étape a) sur au moins une feuille de matériau de renforcement comprenant au moins deux électrodes de cuivre, et iii) le durcissement du matériau sérigraphié pour obtenir un ensemble durci, soit
i) la sérigraphie du mélange obtenu à l'étape a) sur au moins une feuille de matériau de renforcement comprenant au moins deux électrodes de cuivre intégrées, et ii) le durcissement du matériau sérigraphié pour obtenir un ensemble durci,
c) le percement de la zone comprise entre les électrodes de l'ensemble durci obtenu à l'étape b), et
d) le soudage de câbles de câblage à la surface des électrodes.

14. Utilisation de l'élément composite chauffant selon l'une quelconque des revendications 1 à 12 en guise de système chauffant.

15. Utilisation de l'élément composite chauffant selon la revendication 14 en guise de système chauffant dans un chauffage au sol, un chauffage mural, un dégivrage d'aéronefs, un dégivrage de trains, un chauffage de réservoirs, un chauffage de panneaux de navires.
